# EUROPEAN PATENT APPLICATION

(11) **EP 4 810 371 A1**
(43) Date of publication of application: **23.09.2026**
(21) Application number: 25165201.2
(22) Date of filing: 21.03.2025
(51) Int. Cl.: B64D 11/02, B64D 11/04

(54) **WATER SUPPLY UNIT AND AIRCRAFT HAVING A WATER SUPPLY UNIT**

(71) Applicant: AIRBUS Operations GmbH, 21129 Hamburg (DE)
(72) Inventor: STOLLE, Christian, 21129 Hamburg (DE); SITTE, Fabian, 21129 Hamburg (DE); TORRES, Daniel, 21129 Hamburg (DE)
(74) Representative: Schornack, Oliver

(57) **Abstract**

The present disclosure relates to a water supply unit (100) for an aircraft, and an aircraft comprising the same. Particularly, the water supply unit (100) combines a heating device (120) with means (130, 140) to provide water of a controlled temperature.

## Description

The present disclosure generally relates to a water supply unit for an aircraft, and an aircraft comprising the same. Particularly, the present disclosure relates to a compact water supply unit combining a water heating device with means to provide water of a controlled temperature, and an aircraft comprising at least one such water supply unit.

A conventional means to provide warm water to a water consumer in an aircraft comprises a water heater configured to heat water to a predefined temperature and a mixing device mixing the heated water with cold water, in order to output water of a desired temperature to the water consumer. This, hence, requires several devices and control equipment.

Nevertheless, heating water in an aircraft can still be improved.

It is therefore an object of the present disclosure to provide an improved water supply unit for an aircraft.

This object is solved by the present invention as defined in the independent claims. Preferred embodiments are defined by the dependent claims.

According to a first aspect to better understand the present disclosure, a water supply unit for an aircraft comprises a cold water inlet, a heating device connected to the cold water inlet and configured to heat a predefined amount of water, a warm water outlet configured to discharge warm water from the heating device, and a mixed water outlet. In general, a portion of the cold water can be heated and can then be mixed with cold water, in order to supply water of a particular temperature. The warm water outlet is to be understood as an internal warm water outlet configured to discharge heated water before being mixed with cold water. Thus, the mixed water outlet actually is an outlet for warm(ed) water, too, but may output water of a temperature less than or equal to the water temperature of the (internal) warm water outlet.

The water supply unit further comprises a first valve disposed between the warm water outlet and the mixed water outlet, a second valve disposed between the cold water inlet and the mixed water outlet, and a controller configured to control the first and second valves to supply water of a controlled temperature to the mixed water outlet.

Thus, both valves can discharge/release water towards the mixed water outlet. In other words, both valves lead to a common outlet, duct or pipe including or formed by the mixed water outlet. Depending on the respective amount of water from each valve, the temperature of the mixed water can be controlled and set. Thus, the water supply unit is of a simple design and is easy to implement. Since only two valves have to be controlled to fulfil a demand for water and to provide such water with the controlled temperature, the implementation of the water supply unit is easy and simple.

In an implementation variant, the water supply unit can further comprise a housing configured to house the heating device, the warm water outlet, the first and second valves, and the controller.

Thus, instead of having separate devices for heating water and mixing, the water supply unit allows a compact design. This further allows to have a single cold water connection (or coupling at or forming the cold water inlet), a single mixed water connection (or coupling for connecting a water consumer) as well as a single electrical connection at the water supply unit, which further reduces complexity.

In an implementation variant, the first and second valves can be controlled valves, wherein the controller can control an opening degree of each of the first and second valves. A controlled valve is to be understood as a valve that can change its opening degree, so that the flow rate (i.e., amount of water) through the valve can be adjusted. For instance, the controlled first and second valves can be proportional valves.

In an implementation variant, the first valve and/or second valve can be a solenoid valve, and/or a motorised valve, and/or a hydraulically or pneumatically controlled valve. The motorised valve can have an electric motor configured to move the valve from the closed position to an open position and any opening degree therebetween. The same applies to the hydraulically or pneumatically operated valve, where the actuator is not an electric motor, but is hydraulically or pneumatically operated. It is to be understood that the first and second valves can be of the same type or can be of different types.

For instance, the valves can be employed to gradually open the valves (e.g., gradually or temporarily full) and release/discharge cold and hot water towards the mixed water outlet.

In an implementation variant, the heating device can comprise a water tank configured to hold the predefined amount of water, and a heater arranged in or at the water tank. Thus, the water tank provides a supply of warm water, in order to achieve the controlled temperature of the water at the mixed water outlet.

In an implementation variant, the heating device can further comprise a fill level sensor arranged in the water tank. The fill level sensor can be arranged at any height level in or at the water tank. The fill level sensor can output a signal indicating that a water level in the water tank has reached a predefined height, such as a minimum level and/or a maximum level.

In an implementation variant, the heating device can further comprise a temperature sensor arranged in the water tank and configured to measure a temperature of the predefined amount of water. Thus, the temperature of the warm water can be determined, in order to control or set the controlled temperature at the mixed water outlet.

The fill level sensor and/or the temperature sensor can be connected to the controller, so that the controller is able to control the first and second valves and/or the heater based on an output signal of the fill level sensor and/or the temperature sensor.

In an implementation variant, the heating device can further comprise a baffle arranged in a bottom region of the water tank, wherein the cold water inlet is connected to the water tank in the bottom region. Thus, the cold water entering the water tank impinges the baffle and has to flow around the baffle. This avoids a strong and/or fast mixing of the supplied cold water with the already heated water. Thus, the cold water may be kept in the bottom region, while the heated warm water will be at a ceiling region (i.e., a top or upper region) of the water tank.

In an implementation variant, the heating device can further comprise an air ventilation valve, for example, arranged at a ceiling region of the water tank, and configured to release air from the water tank. Thus, the water tank can be filled with cold water from the cold water inlet, while air can be released from the water tank.

In an implementation variant, the air ventilation valve can be further configured to avoid releasing water from the water tank. In other words, the air ventilation valve blocks water from flowing through the air ventilation valve. As a mere example, the air ventilation valve can comprise a membrane permeable to air but not water. Alternatively or additionally, the air ventilation valve can comprise a blocking device that floats in water. Thus, in case water reaches the air ventilation valve, it closes the valve and water is hindered from being released through the air ventilation valve.

In an implementation variant, the warm water outlet can comprise a pipe having an open end at a ceiling region of the water tank. The ceiling region can be a top region or upper region of the water tank. In any case, as heated water rises within the water tank towards the ceiling region. Thus, the open end of the warm water outlet, i.e. the inlet of the pipe forming the warm water outlet, is in the region where the warmest water will accumulate. For instance, the open end of the warm water outlet is arranged at a height in the water tank that will be flooded by water if the water supply unit is operating and filled. This will assure that warm water is always available (i.e., provided via) the warm water outlet.

In an implementation variant, the water supply unit can further comprise an electric connector. This electric connector can include one or more electrical power supply lines supplying electric energy to the water supply unit. In addition, signal or data lines may also be included in the electrical connector, so that the water supply unit can be controlled from a more general controller in the aircraft. Likewise, a ground line can be provided in the electric connector.

In an implementation variant, the water supply unit can further comprise a main switch between the electric connector and the controller. Thus, the entire water supply unit can be switched off, for example, if not in use or in case of replacement.

In an implementation variant, the water supply unit can further comprise an indicator configured to indicate a status of the water supply unit. Such indicator can be implemented as a light emitting device (e.g., one or more LEDs), a display, or a mechanical indicator, such as a pointer.

In an implementation variant, the water supply unit can further comprise a human machine interface configured to receive a user input for setting a mode of operation of the controller. The human machine interface can include one or more knobs, buttons, or keys, and/or a touchscreen or the like.

In an implementation variant, the indicator and the human machine interface can be integrated into one another. Thus, for example, the human machine interface can be employed to indicate information about the water supply unit.

In an implementation variant, the water supply unit can further comprise at least one controlled switch, wherein the controller is configured to switch the at least one controlled switch on or off. Such controlled switch may be employed to switch one or more components or sections of the water supply unit on or off and/or to control one or more functions of the controller. Such components or functions can be or can employ the controllable first and second valves, the heater, or the like.

In an implementation variant, the water supply unit can further comprise a mixed water temperature sensor configured to measure a water temperature of the water in the mixed water outlet. Such mixed water temperature sensor can be arranged in a pipe included in or forming the mixed water outlet, or can be arranged in thermal contact of such pipe.

In an implementation variant, the water supply unit can further comprise a bypass fluidly connecting the warm water outlet with the cold water inlety. For instance, the bypass can bypass the water tank. Such bypass (pipe) can include a means, such as an orifice or the like, that guides cold water into the water coming from the warm water outlet, in order to reduce the water temperature of the warm water outlet. For instance, such "cooling" of the warm water may be required, if the water temperature in the water tank is too high, and the means in the bypass (pipe) is configured to limit the resulting water temperature from the warm water outlet.

In an implementation variant, the water supply unit can further comprise a check valve between the mixed water outlet and the cold water inlet. For instance, the check valve can achieve a closed position towards the mixed water outlet, if a water pressure at the cold water inlet is higher than at the mixed water outlet. Furthermore, the check valve can achieve an open position, if the water pressure at the cold water inlet is lower than at the mixed water outlet. Thus, in case the pressure in the water tank as well as the bypass pipe decreases, for example when stopping the cold water supply at the cold water inlet, the check valve can achieve the open position, thereby draining water from the warm water outlet and the mixed water outlet towards the cold water inlet.

In case the water pressure at the cold water inlet is equal to the water pressure at the warm water outlet, the check valve can be configured to achieve the closed position.

According to a second aspect to better understand the present disclosure, an aircraft comprises at least one water supply unit of the first aspect or one or more of its variants.

In an implementation variant, the aircraft can further comprise a water consumer connected to the mixed water outlet. Such water consumer can be a faucet, a hot beverage preparing device (e.g., coffeemaker, hot water dispenser, etc.), or the like.

In an implementation variant, the aircraft can further comprise a water consumer controller configured to send a signal to the controller of the water supply unit indicating a demand of mixed water supply, and/or a signal specifying a required water temperature. Thus, the water consumer controller can trigger the controller of the water supply unit to open the first and/or second valve, in order to provide water via the mixed water outlet.

In an implementation variant, the controller of the water supply unit can be further configured to control the first and/or second valve in order to fulfil the demand/request of mixed water supply, and optionally to control the first and/or second valve to achieve the required (i.e., controlled) water temperature.

According to a third aspect to better understand the present disclosure, an aircraft monument comprises at least one water supply unit of the first aspect or one or more of its variants. Such a monument can be a lavatory, a bathroom or a galley.

Likewise, the aircraft of the second aspect can comprise one or more of such aircraft monuments.

The present disclosure is not restricted to the aspects and variants in the described form and order. Specifically, the description of aspects and variants is not to be understood as a specific limiting grouping of features. It is to be understood that the present disclosure also covers combinations of the described aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a side view of a water supply unit;
- Figure 2: schematically illustrates an exemplary water flow of a water supply unit;
- Figure 3: schematically illustrates an exemplary electrical conductor routing;
- Figure 4: schematically illustrates a conventional warm water preparation; and
- Figure 5: schematically illustrates an aircraft with a monument and a water system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

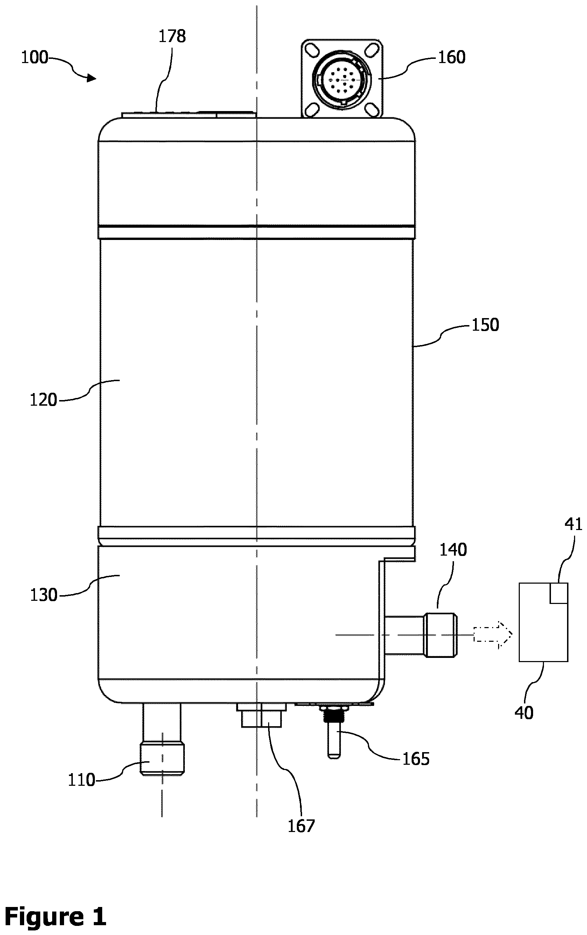

Figure 1 schematically illustrates a side view of a water supply unit 100 comprising a cold water inlet 110, a heating device 120 and a mixed water outlet 140. The mixed water outlet 140 is configured to be coupled to a water consumer 40, such as a faucet, beverage maker or the like.

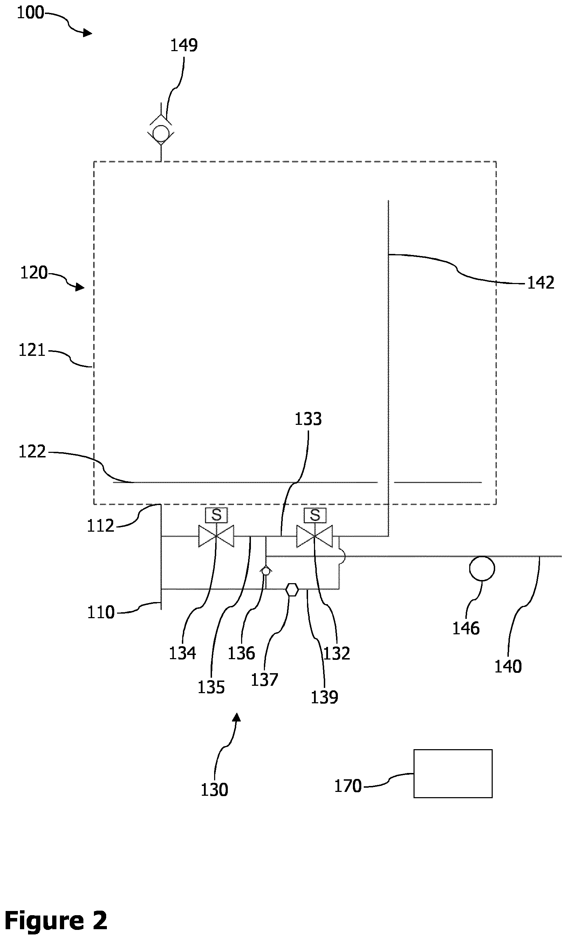

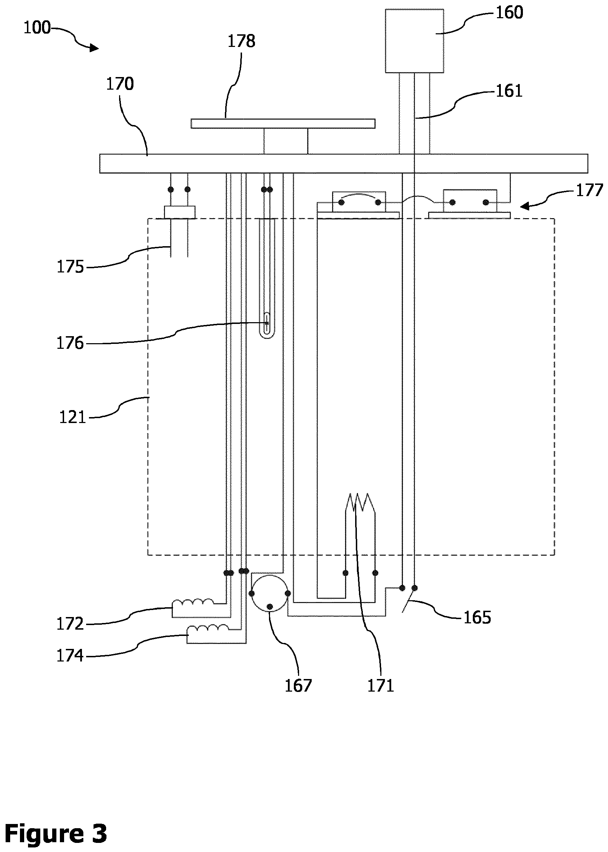

Figure 1 shows the water supply unit 100 in a common housing 150 configured to house the heating device 120 and further components, which will be explained in more detail with respect to Figures 2 and 3.

Outside of the housing 150 or at least accessible from the outside, the water supply unit 100 can comprise an electric connector 160, through which, preferably, electric power is supplied to the water supply unit. In addition, signals may be communicated via the electric connector 160, in order to control or influence control of the water supply unit 100.

Furthermore, the water supply unit 100 can comprise a main switch 165 that is configured to switch the overall water supply unit 100 on or off. An indicator 167 can be provided that is configured to indicate a status of the water supply unit 100. Such indicator can be implemented in form of one or more light emitting devices (LEDs), a display or the like. A status of the water supply unit 100 can simply be an indication that the power to the water supply unit 100 is on or off. A further status can be the heating of the water in the heating device 120, a normal operation or a fault/error situation of one or more of the components of the water supply unit 100. Furthermore, another status can be the deactivation of the water flow or of the water consumer for cleaning of the water supply unit 100 and/or the water consumer, e.g., flushing with cold and/or hot water, as well as a disinfection of the water supply unit 100, e.g., by rinsing with cold and/or hot water or disinfection fluid.

Such status can likewise be indicated via a human machine interface 178. The human machine interface 178 may alternatively or additionally be configured to receive a user input for setting a mode of operation of the water supply unit 100, such as rinsing or disinfection.

It is to be understood that the main switch 165, indicator 167 and/or human machine interface 178 can be arranged at a position at/on the water supply unit 100. For instance, the main switch 165 and indicator 167 can be arranged on the top side or a lateral side of the water supply unit 100, or the human machine interface 178 can be arranged at the bottom side or a lateral side of the water supply unit 100. Thus, the present disclosure is not restricted to the illustrated positions.

Figure 1 further illustrates a valve unit 130 that will now be explained in more detail with respect to Figure 2, which schematically illustrates an exemplary water flow in the water supply unit 100.

The heating device 120 can comprise a water tank 121 that is configured to hold a predefined amount of water that can be heated. Such water tank 121 can be filled with cold water via a cold water inlet 110 of the water supply unit 100. For example, the cold water inlet 110 may include a pipe or duct connected to a tank inlet 112 of the water tank 121. By pressurerizing cold water at the cold water inlet 110, the water tank 121 will be filled with cold water. In case air is present in the water tank 121, such air can escape via an air ventilation valve 149 arranged at a ceiling region (i.e., top or upper region) of the water tank 121. Such air ventilation valve 149 may be configured to avoid releasing water from the water tank 121, but to solely release air therefrom.

Once the water in the water tank 121 is heated, it can be released or discharged from the water tank 121 via a warm water outlet 142. As a mere example, such warm water outlet 142 can comprise a pipe having an open end in an upper region of the water tank 121, i.e. close to the ceiling region of the water tank 121. Since warm water rises, having the open end of the warm water outlet 142 in the upper region of the water tank 121 ensures that only heated water is supplied via the warm water supply/outlet 142.

The water supply unit 100, particularly the valve unit 130, comprises a first valve 132 disposed between the warm water outlet 142 and the mixed water outlet 140, where water can be supplied, for example, to a water consumer 40 (Figure 1). The water supply unit 100, particularly the valve unit 130, further comprises a second valve 134 disposed between the cold water inlet 110 and the mixed water outlet 140. On the outlet side of the first valve 132, there can be a hot water pipe 133, and on the outlet side of the second valve 134, there can be a cold water pipe 135. The cold water pipe 135 joins the hot water pipe 133, so that the cold water and hot water are mixed. The hot water pipe 133 and/or cold water pipe 135 after being joined to one another leads to or is the mixed water outlet 140.

A controller 170 of the water supply unit 100 is configured to control the first and second valve 132, 134 to supply water of a set temperature to the mixed water outlet 140. The set temperature may be set with the water supply unit 100, for example, via the human machine interface 178. Alternatively, the temperature can be set by a water consumer controller 41 (Figure 1), which may be configured to send a signal to the controller 170 indicating a required water temperature (besides a demand of mixed water supply). Thus, by opening one or both of the first and second valve 132, 134, a water supply to the water consumer 40 can be provided, while the temperature of the provided water is set and is also adjustable depending on the amount of cold and warm water supplied via the valves 132, 134.

A mixed water temperature sensor 146 may be employed that measures a water temperature of the water in the mixed water outlet 140.

As a mere example, since the water at the cold water supply 110 is pressurised, such pressure can be employed to convey the water through each of the first and second valve 132, 134. In order to maintain the warm water in the water tank 121 at a desired maximum temperature, a baffle 122 can be provided in a bottom region of the water tank 121, and the inlet 112, where the cold water inlet 110 is connected to, is likewise provided in the bottom region. Therefore, water entering the water tank 121 will impinge the baffle 122, which may be configured to distribute the cold water in the bottom region and avoid mixing the cold water with the hot water that is risen to the top region of the water tank 121.

The water supply unit 100, as exemplarily illustrated in Figure 2, can further comprise a bypass pipe 139 bypassing the water tank 121 and fluidly connecting the warm water outlet 142 with the cold water inlet 110. As a mere example, a temperature controlling means 137 may be provided in the bypass pipe 139, that opens in case the water temperature in the warm water outlet 142 is above a threshold value. Thus, cold water may enter the warm water outlet 142, in order to reduce the temperature of the water therein.

While the temperature controlling means 137 may be self-operating, it may likewise be controlled by the controller 170. Thus, the threshold temperature at which the temperature controlling means 137 opens can be adjusted. The temperature controlling means 137 can be an orifice or a controllable valve.

The water supply unit 100 may further comprise a check valve 136 between the mixed water outlet 140 and the cold water inlet 110. As a mere example, the check valve 136 can be provided between the bypass pipe 139 and the mixed water outlet 140. The check valve 136 is configured to achieve a closed position, if the water pressure at the cold water inlet 110 (e.g., the bypass pipe 139) is higher than the water pressure at the mixed water outlet 140. On the other hand, the check valve 136 is further configured to achieve an open position, if the water pressure at the cold water inlet 110 is lower than at the mixed water outlet 140. In case the water pressure at the cold water inlet 110 and the mixed water outlet 140 is equal, the check valve 136 may be configured to achieve the closed position.

Thus, if the cold water inlet 110 is depressurised (e.g., any water supply is switched off), the check valve 136 may achieve an open position. This allows water from the mixed water outlet 140 to drain towards the cold water inlet 110, for example, only by gravity. This likewise pertains to water in the water consumer 40, which may be drained by gravity. Water from the water tank 121 and the warm water outlet 142 can also be drained via the cold water inlet 110, for example, through the check valve 136 and/or the bypass pipe 139.

Figure 3 schematically illustrates an exemplary electrical conductor routing in the water supply unit 100. It is to be understood that the arrangement (location) of any component in Figure 3 is exemplary, and that any component of the water supply unit 100 can be arranged at different locations.

The electrical connector 160 can include at least one electric power supply line 161 that supplies electric power to one or more components of the water supply unit 100, for example, the controller 170. A main switch 165 may be between the electric connector 160 and the controller 170, in order to switch on or off the entire water supply unit 100.

The heating device 120 can comprise a fill level sensor 175 arranged in the water tank 121, for example, in an upper region or ceiling region of the water tank 121. The fill level sensor 175 can output a signal to the controller 170 indicating a water level in the tank 121. Furthermore, the heating device 120 can comprise at least one temperature sensor 176 arranged in the water tank 121, which is configured to measure a temperature of the water in the water tank 121.

A heater 171 can further be arranged in the water tank 121, in order to heat the predefined amount of water, i.e., the water stored in the water tank 121. The heater 171, for example, can be an electric heater generating heat with an electric resistor. The heater 171 is not restricted to such resistor-based heater, but may include other types of heaters.

The water supply unit 100 can further comprise at least one controlled switch 177, wherein the controller 170 is configured to switch the at least one controlled switch 177 on or off. Such controlled switch 177 may be employed to switch the heater 171 on or off. Alternatively or additionally, the control switch 177 may include a fuse that interrupts electric supply in case of an overcurrent or for other security reasons.

Figure 3 further illustrates an electrical connection between the controller 170 and the first and second valve 132, 134. As a mere example, a valve actuator 172, 174 may be provided for the first and second valve 132, 134, respectively, that can be controlled by the controller 170. For instance, the illustrated valve actuators 172, 174 can be an electric motor or can be a solenoid of a solenoid valve.

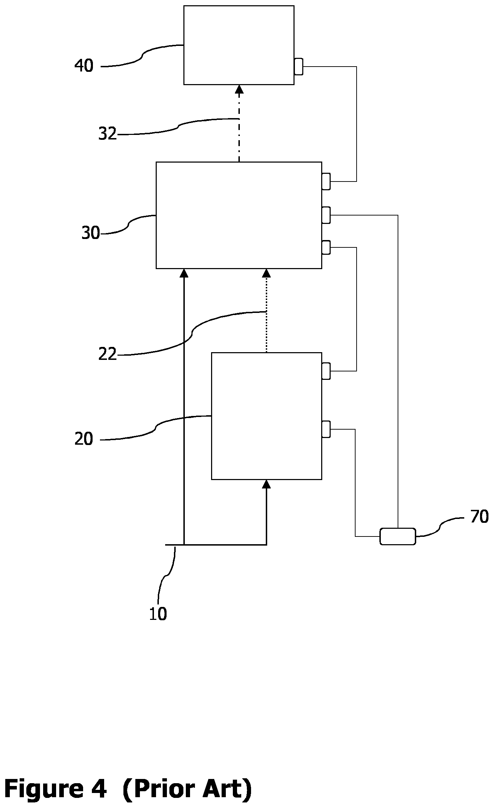

Figure 4 schematically illustrates a conventional warm water preparation. A cold water supply 10 provides cold water to a water heater 20 as well as a mixing device 30. The water heater 20 is also fluidly coupled to the mixing device 30 and provides warm water via a pipe 22 to the mixing device 30. A water consumer 40 receives water at a desired temperature mixed in the mixing device 30, for example, via a pipe 32.

Each of these components 20, 30, 40 comprises a controller configured to control the activity of the respective component. For instance, the water consumer 40 can comprise a controller configured to send a signal indicating a demand of warm water or a demand of water of a desired/indicated temperature. The mixing device 30 comprises a controller that is configured to perform the mixing of cold water (10) and hot water (22). Furthermore, the water heater 20 comprises a controller configured to control the heating of water in the water heater as well as to heat the water to a predefined temperature.

As illustrated in Figure 4, all of the components 20, 30, 40 are electrically connected to one another as well as to an overall general controller 70.

Thus, the conventional preparation of warm water requires not only a plurality of components 20, 30, 40 and ducting 10, 22, 32, but also a significant amount of electric wiring.

When comparing such conventional warm water preparation with the water supply unit 100, e.g., as illustrated in Figures 1 to 3, the disclosed water supply unit 100 is much smaller and significantly simpler with respect to electric wiring and water ducting.

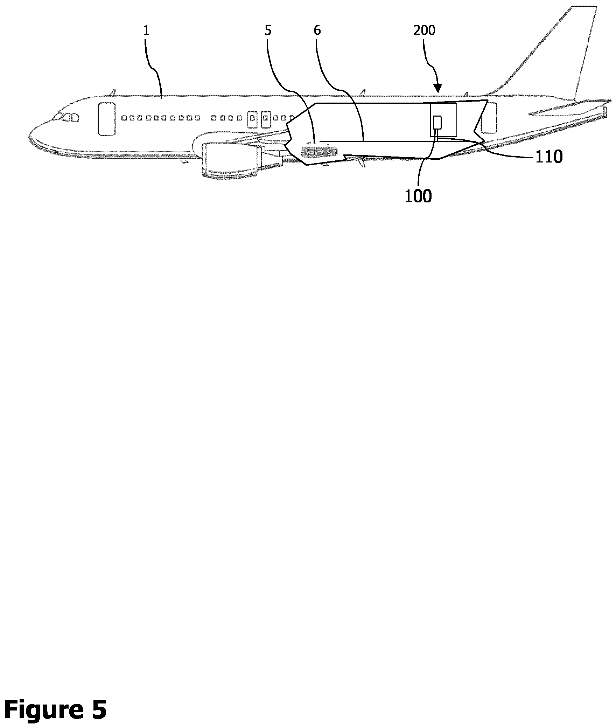

Figure 5 schematically illustrates an aircraft 1 comprising a water system including a water tank 5 and a water supply line 6, connected to the water tank 5 and configured to conduct water to a monument 200. In the monument 200, there is illustrated a water supply unit 100, such as the water supply unit 100 illustrated in Figures 1 to 3. It is to be understood that the water supply unit 100 can be installed in the aircraft 1 independent of a monument 200.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A water supply unit (100) for an aircraft (1), comprising:
a cold water inlet (110);
a heating device (120) connected to the cold water inlet and configured to heat a predefined amount of water;
a warm water outlet (142) configured to discharge warm water from the heating device (120);
a mixed water outlet (140);
a first valve (132) disposed between the warm water outlet (142) and the mixed water outlet (140);
a second valve (134) disposed between the cold water inlet (110) and the mixed water outlet (140); and
a controller (170) configured to control the first and second valves (132, 134) to supply water of a controlled temperature to the mixed water outlet (140).

2. The water supply unit (100) of claim 1, further comprising:
a housing (150) configured to house the heating device (120), the warm water outlet (142), the first and second valves (132, 134), and the controller (170).

3. The water supply unit (100) of claim 1 or 2, wherein the first and second valves (132, 134) are controlled valves, wherein the controller (170) can control an opening degree of each of the first and second valves (132, 134),
wherein the first valve (132) and/or second valve (134) is a solenoid valve, and/or is a motorised valve having an electric motor configured to move the valve from the closed position to an open position and any opening degree therebetween, and/or is a hydraulically or pneumatically controlled valve.

4. The water supply unit (100) of one of claims 1 to 3, wherein the heating device (120) comprises a water tank (121) configured to hold the predefined amount of water, and a heater (171) arranged in or at the water tank (121).

5. The water supply unit (100) of claim 4, wherein the heating device (120) further comprises at least one of:
a fill level sensor (175) arranged in the water tank (121);
a temperature sensor (176) arranged in the water tank (121) and configured to measure a temperature of the predefined amount of water;
a baffle (122) arranged in a bottom region of the water tank (121), wherein the cold water inlet (110) is connected to the water tank (121) in the bottom region; and
an air ventilation valve (149) arranged at a ceiling region of the water tank (121) and configured to release air from the water tank (121), and preferably further configured to avoid releasing water from the water tank (121).

6. The water supply unit (100) of claim 4 or 5, wherein the warm water outlet (142) comprises a pipe having an open end in an upper region of the water tank (121).

7. The water supply unit (100) of one of claims 1 to 6, further comprising at least one of:
an electric connector (160), preferably including at least one electric power supply line (161);
a main switch (165) between the electric connector (160) and the controller (170);
an indicator (167) configured to indicate a status of the water supply unit (100);
an human machine interface (178) configured to receive a user input for setting a mode of operation of the controller (170);
at least one controlled switch (177), wherein the controller (170) is configured to switch the at least one controlled switch (177) on or off; and
a mixed water temperature sensor (146) configured to measure a water temperature of the water in the mixed water outlet (140).

8. The water supply unit (100) of one of claims 1 to 7, further comprising:
a bypass (137) fluidly connecting the warm water outlet (142) with the cold water inlet (110).

9. The water supply unit (100) of one of claims 1 to 8, further comprising:
a check valve (136) between the mixed water outlet (140) and the cold water inlet (110), wherein the check valve (136) achieves a closed position towards the mixed water outlet (140), if a water pressure at the cold water inlet (110) is higher than at the mixed water outlet (140), and achieves an open position, if the water pressure at the cold water inlet (110) is lower than at the mixed water outlet (140).

10. An aircraft (1), comprising:
at least one water supply unit (100) of one of claims 1 to 9.

11. The aircraft (1) of claim 10, further comprising:
a water consumer (20) connected to the mixed water outlet (140).

12. The aircraft (1) of claim 11, further comprising:
a water consumer controller (41) configured to:
send a signal to the controller (170) of the water supply unit (100) indicating a demand of mixed water supply, and, preferably, indicating a required water temperature,
wherein the controller (170) of the water supply unit (100) is further configured to control the first and/or second valve (132, 134) in order to fulfil the demand of mixed water supply, and, preferably, in order to achieve the required water temperature.
